# FASCICULE DE BREVET EUROPEEN

(11) **EP 0 577 532 B1**
(45) Date de publication et mention de la délivrance du brevet: **09.09.1998**
(21) Numéro de dépôt: 93420278.9
(22) Date de dépôt: 28.06.1993
(51) Int. Cl.: H02J 3/14, H02J 13/00

(54) **Installation de distribution d'énergie électrique avec structure de communication domotique**
Elektrische Energieverteilungsanlage mit Hausleittechnikkommunikationsstruktur
Electrical energy distribution installation with domestic network communication structure

(30) Priorité: 01.07.1992 FR 9208189
(43) Date de publication de la demande: 05.01.1994
(73) Titulaire: SCHNEIDER ELECTRIC SA, 92100 Boulogne Billancourt (FR)
(72) Inventeur: Gilot, Alain, F-38050 Grenoble Cédex 09 (FR)
(74) Mandataire: Ritzenthaler, Jacques

(56) Documents cités:
- EP-A- 208 597
- EP-A- 250 320
- WO-A-92/05616
- FR-A- 2 660 781
- GB-A- 2 198 605
- GB-A- 2 229 023

## Description

La présente invention se rapporte à une installation de distribution d'énergie électrique associée à une structure de communication domotique, par exemple pour les immeubles d'habitation ou pour le petit secteur tertiaire (petit commerce).

S'agissant par exemple d'une installation de distribution d'énergie électrique vers les différentes pièces d'un logement d'habitation, une telle installation est classiquement prévue de la façon suivante :

Le secteur monophasé arrive en un point de branchement où se trouvent le compteur d'énergie électrique et le disjoncteur de branchement qui sont affectés à ce logement.

En aval du disjoncteur de branchement sont généralement prévus des disjoncteurs divisionnaires qui protègent les différents départs, ces départs étant organisés par fonctions. On y trouve par exemple :
. quelques départs qui alimentent les prises de courant ;
. quelques départs qui alimentent les points d'éclairage ;
. un départ spécifique d'alimentation des salles de bains ;
. un départ de puissance pour l'alimentation de l'appareil de cuisson ;
. un départ pour le chauffe-eau électrique ;
. un départ vers le congélateur.

Le réseau résultant de ce câblage classique présente quelques inconvénients dus à des paramètres incontrôlables et variables :
. sa longueur et son arborescence dans le logement concerné et en dehors ;
. les charges qu'il alimente sont très varièes et elles sont source de perturbations souvent difficiles à déterminer ;
. une utilisation du réseau pour le transport local d'information, par exemple par courants porteurs de ligne (C.P.L.), serait problématique car ce circuit ne dispose pas de séparation entre le réseau utile (dans le logement) et le réseau externe qui devrait normalement être interdit.

En conséquence particulière au domaine des communications locales par CPL, il serait difficile d'atteindre une efficacité satisfaisante dans le logement tout en assurant la confidentialité et l'absence d'interférences vis-à-vis du monde extérieur.

L'invention vise à remédier à ces inconvénients. Elle se rapporte à cet effet à un sytème comprenant une installation de distribution d'énergie électrique à partir d'une ligne d'arrivée d'énergie électrique, pour un logement comportant plusieurs pièces, avec dans chaque pièce un ou plusieurs récepteurs électriques et une structure de communication interne domotique associée à cette installation, l'installation comportant, en aval du disjoncteur de branchement, une distribution divisionnaire comportant un ou plusieurs départs pour chacune des pièces du logement, caractérisé en ce qu'au moins un de ces départs aboutit, dans la pièce qu'il concerne, à un serveur chargé de distribuer l'énergie sur des départs individuels vers des récepteurs électriques de cette pièce, et doté d'une fonction "intelligente" domotique apte à assurer, d'une part le dialogue entre les serveurs au moyen d'une liaison domotique globale à protocole élaboré, et d'autre part, le rôle d'interface de communication entre ladite liaison globale et des moyens de communication locale à protocole simplifié, propres à chacune des pièces, entre le ou les serveurs que cette pièce contient, et des organes de commande et les récepteurs placés dans ladite pièce.

La liaison domotique globale peut être réalisée indifféremment par CPL, bénéficiant ainsi du câblage d'alimentation en énergie électrique, ou par un bus filaire.

Avantageusement, cette liaison interne globale entre serveurs est également connectée à une liaison de transmission et réception d'informations vers l'extérieur dudit local via la ligne d'alimentation en énergie électrique.

Dans le cas d'une liaison domotique globale par CPL, des filtres rejecteurs sont prévus au niveau de chaque serveur pour isoler la liaison domotique globale des récepteurs, sources d'interférences, et au niveau de la distribution divisionnaire ou du disjoncteur de branchement afin d'éviter que les informations de communication interne entre serveurs puissent être diffusées vers l'extérieur.

Les serveurs permettent une hiérarchisation de la communication entre la liaison globale et les moyens de communication locale, ce qui simplifie grandement les moyens de communication locale, et réduit donc les coûts des organes de commande et des récepteurs.

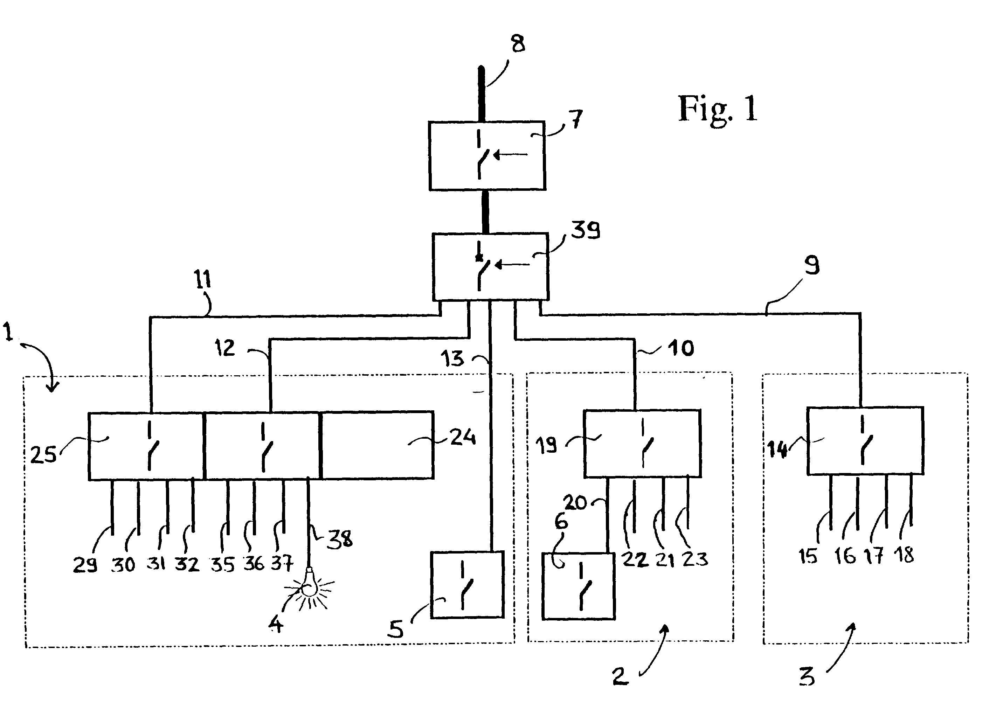

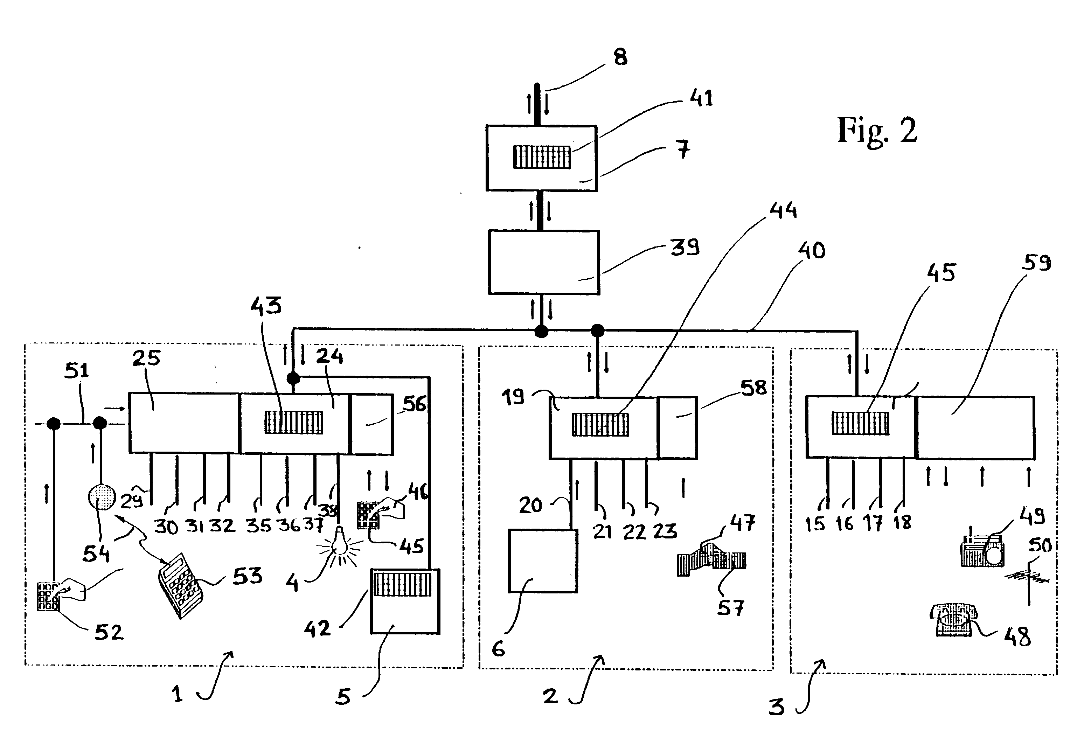

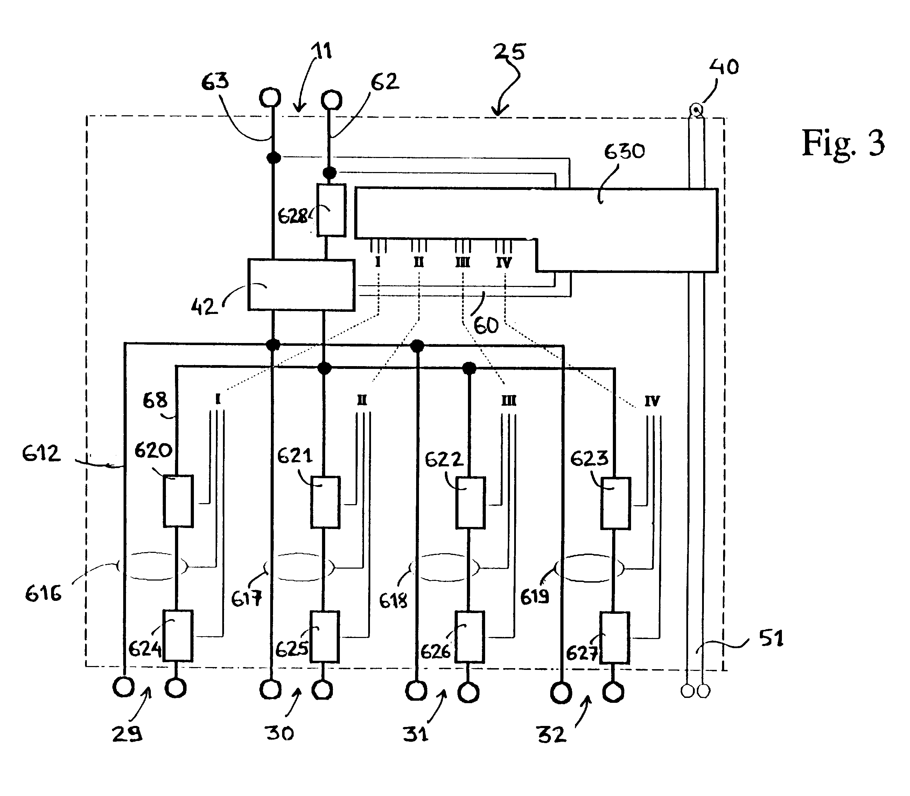

L'invention sera bien comprise, et ses avantages et autres caractéristiques ressortiront mieux, lors de la description suivante de cette installation de distribution d'énergie électrique associée à une architecture de communication domotique, en référence au dessin schématique annexé dans lequel :
. Figure 1 est un schéma synoptique de la partie de distribution d'énergie électrique de cette installation ;
. Figure 2 est un schéma synoptique de sa partie relative aux communications domotiques ; et
. Figure 3 est un schéma synoptique d'un des serveurs qui équipe cette installation.

La figure 1 est le schéma de la distribution d'énergie électrique dans un local, par exemple un logement du genre appartement ou villa, comprenant trois pièces 1, 2, 3, chacune pourvue de charges telles que des prises de courant, des lampes d'éclairage 4, un appareil de cuisson à forte puissance 5, un lave-linge 6, etc...

Un disjoncteur de branchement 7 est classiquement prévu au point d'arrivée de la ligne 8 du secteur monophrasé d'alimentation en énergie électrique.

Immédiatement en aval du disjoncteur de tête 7 est placé un répartiteur classique 39, avec ses disjoncteurs divisionnaires, constituant une protection réflex géographique pour chaque pièce.

Classiquement, les départs en sortie d'un tel répartiteur sont prévus par fonction. Ici, selon l'invention, ils sont prévus par pièce 1, 2, ou 3 du logement. Plus précisément, il est prévu:
. une ligne de départ 9 vers la pièce 3 ;
. une ligne de départ 10 vers la pièce 2 ; et
. trois lignes de départ 11, 12, 13 vers la pièce 1.

La pièce 3 comportant plusieurs charges, par exemple une lampe d'éclairage et trois prises de courant, la ligne 9 aboutit à un serveur 14 qui, par une commande domotique qui sera décrite ci-après en référence à la figure 2, répartit l'énergie électrique sur différents départs 15 à 18 reliés chacun à une charge respective : prise de courant ou lampe d'éclairage.

De même façon, dans la pièce 2 est prévue un autre serveur 19, par exemple identique au serveur 14, qui répartit l'énergie électrique incidente sur la ligne 10 vers plusieurs départs 20 à 23 propres chacun à une charge, telle que la charge 6 pour le départ 20.

La pièce 1 comporte par exemple neuf charges, dont une charge 5 de forte puissance.

En conséquence, elle est alimentée par les trois lignes 11 à 13, dont :
. la ligne 13 qui alimente directement l'appareil de cuisson 5, de sorte que sur cette ligne un serveur n'est pas nécessaire, du moins pour ce qui est de la répartition d'énergie ;
. la ligne 12 qui est connectée à un serveur 24, semblable aux précédents et dont partent quatre départs individuels 35 à 38 vers quatre charges respective, dont la lampe d'éclairage 4 ; et
. la ligne 11 qui est connectée à un autre serveur 25, toujours de même type, dont part quatre départs 29 à 32 vers quatre charges respectives.

Ces serveurs ne sont pas de simples répartiteurs d'énergie électrique. Ils sont en outre associés à un flux de communications d'informations domotiques, et ont donc aussi une fonction "intelligente". Ces fonctions pourraient être assurées par des appareils "intelligents" distincts des serveurs 14, 19, 24, et 25, mais il est plus simple et plus fonctionnel de les intégrer à chaque fois en un seul et même serveur.

Chaque appareil particulier, tel que la lampe 4, l'appareil de cuisson 5, ou le lave-linge 6, est bien-entendu normalement associé à un interrupteur manuel local de mise en marche, mais en outre toutes les charges sont commandables à distance, de la pièce où elles se trouvent mais également d'une pièce voisine, grâce au réseau de communications domotiques qui est schématisé sur la figure 2 à laquelle on se reportera maintenant.

Comme on le voit sur cette figure, les parties "intelligentes" des serveurs 25, 24, 19, et 14 sont interconnectées par une liaison interne globale 40 à protocole élaboré soit par lignes filaires dédiées, soit par courants porteurs de ligne, ou "C.P.L." (dans un tel cas, la ligne 40 est aussi la ligne de transport d'énergie électrique).

La protection réflex géographique 39 et le disjoncteur de branchement 7 sont normalement transparents pour toutes les informations qui transitent, entre serveurs, dans la liaison interne globale 40. Si la liaison 40 est une liaison à courants porteurs de ligne, et afin de confiner ces informations au niveau de cette liaison 40, et donc d'éviter qu'elles ne se propagent au-delà, en avant (vers des utilisateurs extérieurs via le secteur 8) ou en aval, il est cependant prévu, au niveau du disjoncteur de branchement 7, et au niveau de chacun des serveurs 25, 19, 14, des filtres réjecteurs, respectivement 41 à 45, du type CPL, faciles à approvisionner.

Il est également possible, comme indiqué par les double-flèches de part et d'autre de la ligne 8, de diriger, via la liaison 40 et vers les serveurs, des instructions lointaines, extérieures au logement, et émanant par exemple du fournisseur d'énergie.

Dans chaque pièce 1, 2, ou 3, il est prévu des moyens de communication locale à protocole simplifié, entre soit un utilisateur 46, 47 soit un autre moyen de commande (commande par ligne téléphonique 48, commande par câble de télévision 50 ou de radio 49...) et le ou les serveurs de cette pièce, par exemple :
. soit par bus de communication interne simple 51, par exemple avec une signalisation du type "DTMF" (Dual Tone Modulated Frequency) sur tension continue, classique en téléphonie, par exemple. L'accès à ce bus à protocole simplifié 5, peut alors s'effectuer soit par clavier 52 à liaison directe, soit par clavier 53 de télécommande par rayons infra-rouge 54, ou autre...;
. soit par clavier 55, avec afficheur 56 lié aux serveurs 24, 25 de la pièce;
. soit par carte magnétique 57 associée à un lecteur 58 relié au serveur 24;
. soit par sonde locale, de température, d'heure, ou d'humidité par exemple;
. soit par un autocommutateur 59 relié au serveur 45 et recevant les informations en provenance des appareils 48, 49, 50 précités, et donc dans ce cas à commande lointaine.

A noter que l'appareil de cuisson 5, qui ne dépend d'aucun serveur particulier, est relié, du point de vue des communications intelligentes domotiques, directement au bus de liaison interne globale 40.

La fonction "intelligente" des serveurs 42 à 45 assure également l'interface de cummunication entre la liaison interne globale 40 à protocole élaboré située en amont des serveurs, et les moyens de communication locale 48 à 59 à protocole simplifié situés en aval.

Il est ainsi possible de commander à partir d'une seule pièce aussi bien l'une ou l'autre, ou l'ensemble, des charges de cette pièce, que l'une ou l'autre ou l'ensemble, des charges d'une ou plusieurs autres pièces.

De telles commandes sont aussi possibles de l'extérieur soit par le secteur téléphonique commuté, soit par ondes radioélectriques, ou autres. Il est aussi possible d'introduire des ordres, ou de faires des interrogations, via la ligne d'alimentation 8 en énergie électrique.

Comme indiqué par les flèches le long de la ligne 20, un appareil déterminé, tel que le lave-linge 6, peut aussi être équipé pour transmettre au serveur 19 une information sur son état allumé ou éteint, en panne ou non, en utilisant les câbles d'alimentation en énergie électrique comme support véhiculaire, par exemple avec une signalisation du type DTMF superposée à l'alimentation en 220 volts (CPL à protocole simplifié).

Un exemple de serveur, tel que le serveur 25, qui est avantageusement utilisable, est un serveur tel que décrit dans la demande de Brevet français N° 92.03434 déposée le 19 mars 1992 par la Demanderesse et résumée ci-après en référence à la figure 3.

Le serveur 25 est en fait un dispositif de distribution phase-neutre d'énergie électrique alternative monophasée basse-tension vers divers récepteurs placés dans le local et non représentés au dessin, associé à un dispositif de communication double, une communication élaborée vers l'amont, et une communication simple vers l'aval.

Il est admis ici que ces récepteurs sont des appareils électriques, des récepteurs de télévision ou d'ondes radioélectriques, des lampes d'éclairage, des convecteurs, des appareils électroménagers,..., qui peuvent supporter des coupures d'alimentation d'une durée pouvant aller jusqu'à environ cinq millisecondes sans conséquences visuelles ou effectives sur leur fonctionnement, ce qui ne serait pas le cas pour certains appareils de calcul informatique.

Ce serveur comporte une arrivée bifilaire commune 11, avec un fil de phase 62 et un fil de neutre 63, et ici quatre départs bifilaires 29 à 32 qui sont branchés en dérivation sur cette arrivée commune 11, avec chacune son fil de phase, tel que le fil 68 pour la ligne 29, et son fil de neutre, tel que le fil 612.

Sur chaque départ 29 à 32 est respectivement prévu d'une part un détecteur différentiel de fuite à la terre, respectivement 616 à 619, et d'autre part un détecteur de surintensité, respectivement 620 à 623, qui est placé sur le fil de phase, tous ces capteurs étant réglables indépendamment pour chaque départ.

Sur le fil de phase de chacun de ces départs 29à 32 est en outre placé un relais divisionnaire télécommandé, ou relais d'isolement, respectivement 624 à 627, qui est constitué par un simple relais électromécanique sans pouvoir de coupure, et donc très bon marché. Un petit relais d'isolement de ce type réagit en une milliseconde environ.

Une unité électronique de calcul et de commande 630, tel qu'un microprocesseur, reçoit les signaux en provenance des capteurs 16 à 623 et donne des ordres de commande d'ouverture et de fermeture aux relais d'isolement 624 à 627, comme indiqué par les quatre groupes de chacun trois interconnexions qui sont référencés I à IV.

Le filtre réjecteur précité 42 est placé sur la ligne d'arrivée 11, juste en amont des dérivations 612,68,etc... Il est relié au microprocesseur 630 par une ligne optionnelle de communication locale 60.

Un interrupteur statique électronique 628 est placé, en amont du filtre 42, sur le fil de phase 62 de la ligne d'arrivée 11, la borne de commande 629 de cet interrupteur statique étant connectée à une des portes de sortie du microprocesseur 630.

En plus de la commande automatique "réflexe" qui provient des capteurs, le microprocesseur reçoit et renvoie également des informations en provenance des moyens de communication 48 à 59 et 20 à protocole simplifié et celles transitant sur la liaison globale 40.

Le fonctionnement de ce serveur 25 est le suivant :

En cas de naissance d'un défaut dans un des circuits de départ 29 à 31 dû soit à la naissance d'une surintensité (surcharge ou court-circuit) ou d'un défaut de masse, la naissance de ce défaut est quasi-instantanément transmise par le capteur, 616 à 623, correspondant au microprocesseur 630. Ce dernier réagit alors immédiatement par un ordre d'ouverture de l'interrupteur statique 628, suivi d'un ordre d'ouverture du relais d'isolement, 624 à 627, concerné (c'est à dire se trouvant sur le circuit de départ, 29 à 32, qui comporte ce capteur). Puis, après le laps de temps suffisant pour cette ouverture du relais d'isolement, il commande la refermeture du relais statique 628.

La ligne de départ sur laquelle s'est produit le défaut est alors isolée, tandis que les trois autres lignes de départ sont remises en circuit.

En cas de commande externe, soit locale par exemple par l'intermédiaire de la liaison simplifiée 51, soit lointaine par l'intermédiaire du bus 40, la coupure ou la mise en service, respectivement par ouverture ou fermeture du relais d'isolement concerné, de l'une ou l'autre des lignes de départ 29 à 32 s'effectue selon les trois phases précitées, c'est-à-dire que la manoeuvre d'un relais d'isolement s'effectue toujours avec l'interrupteur statique 628 ouvert, mais toutefois la première phase est simplifiée du fait qu'elle s'effectue en un seul temps d'ouverture de cet interrupteur statique, sans second essai au prochain passage à tension nulle.

Finalement, l'invention permet, par son architecture résultant d'une approche en gestion répartie par pièce :
. d'optimiser le câblage de la distribution de l'énergie électrique,
. de réaliser une sélectivité totale, puisque par charge dans l'installation, donc une continuité de service parfaite,
. de réaliser une continuité de livraison par la remise en service automatique de la livraison après élimination d'un défaut,
. de réaliser une communication domotique optimisée dans sa performance et dans son coût :
   . avec un choix de moyens de communication rapprochée, incluant la commande filaire traditionnelle, la commande à distance infra-rouge et la remontée de statuts par exemple en courants porteurs DTMF/230 V,
   . avec un choix de communication locale à travers les serveurs/concentrateurs et des consoles-claviers fixes sur un bus simple utilisant par exemple les courants porteurs DTMF/24 V et permettant de contrôler toutes les charges.
   . avec un choix de communication globale à protocole élaboré par courants porteurs CPL ou bus filaire.
. de réaliser des automatismes domotiques avec des appareils (charges) traditionnels, non équipés pour la domotique,
. de réaliser une surveillance des appareils pour entretien et réparation avec des appareils capables de diagnostiquer un certain nombre de pannes et d'émettre des messages de statut.
. d'éviter les interférences, d'une part entre les moyens de communication locale et la liaison globale, et d'autre part entre la liaison globale et les moyens de communication extérieure au logement, notamment ceux de l'entreprise de distribution de l'énergie électrique.

Comme il va de soi, l'invention n'est pas limitée à l'exemple de réalisation qui vient d'être décrit, et bien au contraire de nombreuses autres formes de réalisation sont envisageables en restant dans le cadre des revendications.

## Revendications

1. Un système comprenant une installation de distribution d'énergie électrique à partir d'une ligne d'arrivée (8) d'énergie électrique, pour un logement comportant plusieurs pièces (1,2,3), avec dans chaque pièce un ou plusieurs récepteurs électriques (4,5,6,15-17,29-32,35-38) et une structure de communication interne domotique associée à cette installation, l'installation comportant, en aval du disjoncteur de branchement (7), une distribution divisionnaire (39) comportant un ou plusieurs départs (11-13, 10, 9) pour chacune des pièces (1,2,3) du logement, caractérisé en ce qu'au moins un de ces départs aboutit, dans la pièce (1,2,3) qu'il concerne, à un serveur (25-24, 19, 14) chargé de distribuer l'énergie sur des départs individuels (29-32, 35,38, 20-23, 15-18) vers des récepteurs électriques de cette pièce, et doté d'une fonction "intelligente" domotique apte à assurer, d'une part le dialogue entre les serveurs au moyen d'une liaison domotique globale (40) à protocole élaboré, et d'autre part, le rôle d'interface de communication entre ladite liaison globale (40) et des moyens de communication locale (20, 51) à protocole simplifié, propres à chacune des pièces, entre le ou les serveurs que cette pièce contient, et des organes de commande (52, 53, 55,57,48 à 50) et les récepteurs placés dans ladite pièce.

2. Système selon la revendication 1, caractérisée en ce que cette liaison domotique globale (40) entre serveurs est également connectée à une liaison de transmission et réception d'informations vers l'extérieur dudit local via la ligne (8) d'alimentation en énergie électrique.

3. Système selon l'une des revendications 1 ou 2, caractérisée en ce que ladite liaison interne globale a pour support les lignes d'alimentation en énergie électrique, lesdites transmissions domotiques d'informations étant alors réalisées par courants porteurs de ligne.

4. Système selon la revendication 3, caractérisée en ce que des filtres rejecteurs (41,42,44,45) sont prévus au niveau de chaque serveur (25,24,19,14) et de la distribution divisionnaire (39) ou du disjoncteur de branchement (7).

5. Système selon l'une des revendications 1 à 4, caractérisée par le fait que lesdits moyens de communication locale (20, 51) sont réalisés par courants porteurs de ligne.

6. Système selon l'une des revendications 1 à 5, caractérisée en ce que les départs individuels (29-32) associés au serveur comprennent :
. un capteur de surintensité (620),
. un capteur différentiel d'isolement (616),
. et un relais divisionnaire télécommandable (624) qui est placé sur le fil de phase (68),
les signaux électriques délivrés par ces capteurs étant appliqués à une unité électronique de traitement et de commande (630) fonctionnant en mode "réflexe", qui est apte à délivrer des signaux de commande d'ouverture et de fermeture à ces interrupteurs divisionnaires commandables (624 à 627), un interrupteur statique électronique rapide (628) étant en outre prévu sur le fil de phase de l'arrivée commune (62), cet interrupteur statique rapide (628) recevant de l'unité électronique de traitement (630), et en cas de naissance d'une anomalie détectée par l'un ou l'autre des capteurs, un ordre d'ouverture (1ère phase), cet ordre d'ouverture étant suivi (2ème phase) d'un ordre d'ouverture du relais divisionnaire du départ défectueux, puis (3ème phase) d'un ordre de refermeture dudit interrupteur statique (628), cette séquence en trois phases successives se déroulant sur une durée totale qui, restant par exemple inférieure à environ 5 millisecondes, est pratiquement imperceptible pour les récepteurs connectés à chacun de ces départs (29 à 32).

## Patentansprüche

1. System, das eine Installationsverteilung für die über eine Einspeiseleitung (8) zugeführte elektrische Energie für eine Wohneinheit mit mehreren Räumen (1, 2, 3), in denen jeweils ein oder mehrere elektrische Verbraucher (4, 5, 6, 15-17, 29-32, 35-38) installiert sind, sowie eine, dieser Installation zugeordnete gebäudesystemtechnische interne Kommunikationsstruktur umfaßt, wobei die Installation auf der Abgangsseite des Einspeiseleistungsschalters (7) eine Unterverteilung (39) mit einem oder mehreren Abgängen (11-13, 10, 9) für jeden der Räume (1, 2, 3) der Wohneinheit aufweist, dadurch gekennzeichnet, daß mindestens einer dieser Abgänge in dem ihn betreffenden Raum (1, 2, 3) an eine Zentrale (25-24, 19, 14) angeschlossen ist, die dazu dient, die Energie in den einzelnen Abgängen (29-32, 35-38, 20-23, 15-18) auf in diesem Raum installierte elektrische Verbraucher zu verteilen, und über eine "intelligente" gebäudesystemtechnische Funktion verfügt, die in der Lage ist, einerseits über eine gebäudesystemtechnische Hauptverbindung (40) mit höherem Protokoll den Dialog zwischen den Zentralen untereinander und andererseits die Funktion einer Kommunikationsschnittstelle zwischen der genannten Hauptverbindung (40) und den, mit einfachem Protokoll arbeitenden, jedem einzelnen Raum zugeordneten lokalen Kommunikationsmitteln (20, 51) zu gewährleisten, die zum Informationsaustausch zwischen der Zentrale bzw. den Zentralen dieses Raums und den im genannten Raum angeordneten Steuermitteln (52, 53, 55, 57, 48 bis 50) und Verbrauchern dienen.

2. System nach Anspruch 1, dadurch gekennzeichnet, daß diese gebäudesystemtechnische Hauptverbindung (40) darüber hinaus an eine aus dem Raum heraus führende Verbindung angeschlossen ist, die zur Übertragung sowie zum Empfang von Informationen über die Stromversorgungsleitung (8) dient.

3. System nach einem der Ansprüche 1 oder 2, dadurch gekennzeichnet, daß die genannte interne Hauptverbindung die Stromversorgungsleitungen als Trägermedium nutzt, wobei die Übertragung der genannten gebäudesystemtechnischen Informationen mit Hilfe von leitungsgebundenen Trägerströmen erfolgt.

4. System nach Anspruch 3, dadurch gekennzeichnet, daß in Höhe jeder Zentrale (25, 24, 19, 14) sowie in Höhe der Unterverteilung (39) bzw. des Einspeiseleistungsschalters (7) Sperrfilter (41, 42, 44, 45) installiert sind.

5. System nach einem der Ansprüche 1 bis 4, dadurch gekennzeichnet, daß die genannten lokalen Kommunikationsmittel (20, 51) als leitungsgebundene Trägerströme ausgebildet sind.

6. System nach einem der Ansprüche 1 bis 5, dadurch gekennzeichnet, daß die der Zentrale zugeordneten einzelnen Abgänge (29-32).
. eine Überstrom-Meßeinrichtung (620),
. eine Differenzstrom-Meßeinrichtung (616) und
. ein in den Phasenleiter (68) eingesetztes fernbetätigtes Abzweigrelais (624) umfassen, wobei
die von diesen Meßeinrichtungen gelieferten elektrischen Signale eine elektronische Verarbeitungs- und Steuerschaltung (630) beaufschlagen, die als "Reflex"-Schutz arbeitet und in der Lage ist, diese steuerbaren Abzweigschalter (624 bis 627) mit Aus- und Einschalt-Steuersignalen zu beaufschlagen, wobei außerdem ein schneller elektronischer Halbleiterschalter (628) in den Phasenleiter der gemeinsamen Einspeisung (62) eingesetzt ist und dieser schnelle Halbleiterschalter (628) bei Auftreten eines von einer der Meßeinrichtungen erfaßten Fehlers durch die elektronische Verarbeitungsschaltung (630) mit einem Ausschaltbefehl beaufschlagt wird (1. Phase), auf diesen Ausschaltbefehl ein auf das Abzweigrelais des fehlerbehafteten Abgangs wirkender Ausschaltbefehl (2. Phase) und schließlich ein Wiedereinschaltbefehl für den genannten Halbleiterschalter (628) folgt (3. Phase), wobei diese Sequenz aus drei aufeinanderfolgenden Phasen mit einer Gesamtdauer abläuft, die beispielsweise unter etwa 5 Millisekunden liegt und von den, an jeden dieser Abgänge (29 bis 32) angeschlossenen Verbrauchern praktisch nicht wahrgenommen wird.

## Claims

1. A system comprising an installation for distribution of electrical power from an incoming electrical power supply line (8), for a home comprising several rooms (1, 2, 3), with one or more electrical receivers (4, 5, 6,15-17, 29-32, 35-38) in each room and an internal automation system communication structure associated to this installation, the installation comprising, downline from the main circuit breaker (7), a divisional distribution (39) comprising one or more feeders (11-13, 10, 9) for each of the rooms (1, 2, 3) of the home, characterized in that at least one of these feeders is terminated, in the room (1, 2, 3) it concerns, by connection to a server (25-24, 19, 14) responsible for distributing the electrical power on individual feeders (29-32, 35-38, 20-23, 15-18) to electrical loads of this room, and provided with a "smart" automation function able to perform on the one hand the dialogue between the servers by means of a global automation system connection (40) with elaborate protocol, and on the other hand the role of communication interface between said global connection (40) and local communication means (20, 51) with simplified protocol, proper to each of the rooms, between the server or servers which this room contains, and operating devices (52, 53, 55, 57, 48 to 50) and the receiver loads placed in said room.

2. The system according to claim 1, characterized in that this global automation system connection (40) between servers is also connected to a link for transmission and receipt of information from outside via the electrical power supply line (8).

3. The system according to one of the claims 1 or 2, characterized in that said global internal connection has the electrical power supply lines as its support medium, said automation system information transmissions then being performed by line carrier currents.

4. The system according to claim 3, characterized in that rejector filters (41, 42, 44, 45) are provided at the level of each server (25, 24, 19, 14) and of the divisional distribution (39) or the main circuit breaker (7).

5. The system according to one of the claims 1 to 4, characterized in that said local communication means (20, 51) are achieved by line carrier currents.

6. The system according to one of the claims 1 to 5, characterized in that the individual feeders (29-32) associated to the server comprise :
. an overcurrent sensor (620),
. a differential isolation sensor (616),
. and a remote-controlled divisional relay (624) which is placed on the phase wire (68),
the electrical signals delivered by these sensors being applied to an electronic processing and control unit (630) operating in "reflex" mode, which is able to deliver opening and closing command signals to these operable divisional switches (624 to 627), a high-speed electronic static switch (628) being in addition provided on the phase wire (62) of the common incomer, this high-speed static switch (628) receiving from the electronic processing unit (630), and in case of a malfunction occurring detected by one or the other of the sensors, an opening order (1st phase), this opening order being followed (2nd phase) by an opening order of the divisional relay of the faulty feeder, then (3rd phase) by a reclosing order of said static switch (628), this sequence in three successive phases taking place over a total time which, remaining for example less than about 5 milliseconds, is practically imperceptible for the receivers connected to each of these feeders (29 to 32).
